# EUROPÄISCHE PATENTANMELDUNG

(11) **EP 4 516 482 A1**
(43) Veröffentlichungstag der Anmeldung: **05.03.2025**
(21) Anmeldenummer: 23193884.6
(22) Anmeldetag: 29.08.2023
(51) Int. Cl.: B29C 48/10, B29C 48/92, B29C 55/28

(54) **VERFAHREN ZUR BESTIMMUNG DER PLANLAGE VON FLEXIBLEM BAHNMATERIAL, VERFAHREN ZUR BEWERTUNG DER PLANLAGE VON BAHNMATERIAL, PLANLAGEMESSANORDNUNG UND BLASFOLIENANLAGE MIT EINER SOLCHEN PLANLAGEMESSANORDNUNG**

(71) Anmelder: Kdesign GmbH, 53639 Königswinter (DE)
(72) Erfinder: ZIMMERMANN, Richard, 53639 Königswinter (DE); LAMERS, Daniel, 53639 Königswinter (DE)
(74) Vertreter: Neumann Müller Oberwalleney Patentanwälte PartG mbB

(57) **Zusammenfassung**

Verfahren zur Bestimmung der Planlage im Herstellungsverfahren von flexiblem Bahnmaterial, umfassend die Schritte: Ermitteln einer Ist-Planlage des Bahnmaterials (17, 17',19); Ermitteln eines ersten Prozessparameters des Herstellungsverfahrens; Umrechnen der Ist-Planlage des Bahnmaterials (17, 17', 19) in zumindest ein Vergleichs-Maß der Ist-Planlage des Bahnmaterials (17, 17', 19) in Abhängigkeit des ersten Prozessparameters.

## Beschreibung

Die vorliegende Erfindung betrifft ein Verfahren zur Bestimmung der Planlage von flexiblem Bahnmaterial, ein Verfahren zur Bewertung der Planlage von Bahnmaterial, eine Planlagemessanordnung und eine Blasfolienanlage mit einer solchen Planlagemessanordnung.

Bei der Extrusion von Folienschläuchen kommt es bei bestimmten Rezepturen und Produkten zu sogenannten Planlage-Fehlern in der produzierten Folie. Solche Planlage-Fehler sind beispielsweise Wellen mit beliebiger Verteilung, Durchhänger im Bereich der Kanten, und sogenannter Bogenlauf.

Derartige Fehler zeigen sich deutlich beim Abrollen der Folie vom fertigen Wickel, und spannungslosen Ausrollen auf dem Boden. Vereinfacht gesagt sind Planlage-Fehler lokale Längenabweichungen einzelner Folienbereiche über die Bahnbreite.

Optisch sind diese Fehler häufig auch bereits in der unter Bahnspannung stehenden Folienbahn auf dem Weg vom Abzug zum Wickler oder innerhalb des Wicklers zu erkennen.

Es sind Messvorrichtungen bekannt, welche die Ebenheit der Bahn in Querrichtung zwischen Leitwalzen auf dem Weg vom Abzug zum Wickler oder im Wickler erfassen. Ferner sind Messvorrichtungen bekannt, welche die geometrische Qualität des sich aufbauenden Wickels erfassen. Damit soll sichergestellt werden, dass eine schlechte Planlage-Güte bereits frühzeitig erkannt wird.

Es werden auch Regelkreise vorgeschlagen, bei denen derartige Messvorrichtungen mit Reckeinrichtungen gekoppelt werden, welche die Planlage durch Erwärmen und Nachrecken des Folienschlauchs nach dem Abzug verbessern sollen.

Im Bereich des noch runden Folienschlauchs sind Heiztunnel-Einrichtungen bekannt, die oberhalb der Einfriergrenze durch im Durchmesser fest angeordnete Infrarot-Heizstrahler den Folienschlauch nochmals erwärmen, um die Planlage-Güte der später flachgelegten Folie zu verbessern. Dabei nutzt man den Effekt, dass ungleiche Spannungsverteilungen durch unterschiedliche Molekülorientierungen am Umfang des Folienschlauchs und resultierende lokale Längenunterschiede durch Nachwärmen wieder abgebaut werden, sodass Planlage-Fehler in der flachgelegten Folie deutlich vermindert oder ganz verhindert werden.

Die ungleichen Spannungsverteilungen entstehen überwiegend durch Fließeffekte in der Extrusionsdüse des Blaskopfs, beispielsweise durch eine nicht optimal zum Rohstoff passende Flusskanalauslegung, durch ein unpassendes Heizprofil der Extrusionsdüse, oder durch eine ungleichmäßige Umfangs-Temperaturverteilung und/oder Umfangs-Mengenverteilung der Schmelze innerhalb und beim Austritt aus der Extrusionsdüse.

Darüber hinaus kann auch ein in der Höhe unpassend zur Einfriergrenze des Folienschlauchs eingestellter Kalibrierkorb, ein zu hoher Anpressdruck (Füllgrad) im Kalibrierkorb oder ein leicht außermittig zur Extrusionsdüse stehender Kalibrierkorb Planlage-Fehler hervorrufen.

Aus der EP 3 504 043 A1 ist ein Verfahren zur Bestimmung der Planlage von Folien bekannt, bei der die Bestimmung der Planlage bei gleicher Zugspannung erfolgen soll, sodass direkt vergleichbare Bestimmungsergebnisse erhalten werden. Die Bestimmung der Planlage erfolgt insbesondere in Bahnabschnitten, in denen die Bahnspannung bei null beziehungsweise nahe null liegt, um die Planlage der Folie zum Zwecke der Messung möglichst nicht zu beeinflussen. Das Verfahren weist den Nachteil auf, dass die Regelung auf sehr kleine Bahnzüge eine sehr kostenintensive Regelungstechnik bedarf und die maximalen Fördergeschwindigkeiten in diesen Bereichen hierdurch limitiert sind. Zudem erweist sich eine Regelung auf sehr kleine Bahnzüge als wenig stabil respektive störanfällig, was zu einer Erhöhung der Standzeiten führen kann.

Der vorliegenden Erfindung liegt die Aufgabe zu Grunde ein einfaches Verfahren zur Bestimmung der Planlage im Herstellungsverfahren von flexiblem Bahnmaterial sowie ein einfaches Verfahren zur Bewertung der Planlage von Bahnmaterial bereitzustellen. Darüber hinaus ist es Aufgabe der vorliegenden Erfindung eine Planlagemessanordnung und eine Blasfolienanlage mit einem solchen Planlagemessanordnung bereitzustellen, die jeweils eines der zuvor beschriebenen Verfahren ermöglichen.

Zur Lösung der Aufgabe wird ein Verfahren zur Bestimmung der Planlage im Herstellungsverfahren von flexiblem Bahnmaterial vorgeschlagen, umfassend die Schritte: Ermitteln einer Ist-Planlage des Bahnmaterials ; Ermitteln eines ersten Prozessparameters des Herstellungsverfahrens; Umrechnen der Ist-Planlage des Bahnmaterials in zumindest ein Vergleichs-Maß der Ist-Planlage des Bahnmaterials in Abhängigkeit des ersten Prozessparameters.

Die Ist-Planlage des Bahnmaterials kann beispielsweise durch eine Ist-Topografie einer oder mehrerer Oberflächen des Bahnmaterials definiert werden. Die betrachtete Oberfläche kann dabei die Ober- und/oder die Unterseite des Bahnmaterials sein. Die Ist-Topografie beschreibt dabei die ermittelte geometrischen Gestalt der technischen Oberfläche des flexiblem Bandmaterials. Insofern kann in einer möglichen Ausführungsform des Verfahrens zur Ermittlung der Ist-Planlage des Bahnmaterials eine Ist-Topografie einer oder mehrerer Oberflächen des Bahnmaterials ermittelt werden. Daher soll, wenn nachfolgend allgemein von der Ermittlung der Ist-Planlage des Bahnmaterials gesprochen wird, zusätzlich auch die konkrete Ausgestaltung der Ermittlung der Ist-Topografie einer Oberfläche des Bahnmaterials offenbart sein.

In einer weiteren möglichen Ausführungsform kann der erste Prozessparameter des Herstellungsverfahrens ein Bahnzug des Bahnmaterials sein. Der Bahnzug kann entweder durch die auf das flexible Bandmaterial einwirkende Zugkraft in einer Transportrichtung des Bahnmaterials beschrieben werden. Das Ermitteln des Bahnzuges des Bahnmaterials als Prozessparameter kann mittels einer Bahnzugeinheit erfolgen. Die Bahnzugeinheit kann dabei ausgestaltet sein, den Bahnzug zu messen. Der gemessene Bahnzug kann auch als Ist-Bahnzug bezeichnet werden. Die Bahnzugeinheit kann zudem zusätzlich ausgestaltet sein, den Bahnzug auf das Bahnmaterial zumindest abschnittsweise einzustellen. Es ist allerdings auch denkbar, dass für die Ermittlung des Bahnzuges des Bahnmaterials der Soll-Bahnzug des Bahnmaterials festgestellt wird. Hierzu kann der Soll-Bahnzug des Bahnmaterials beispielsweise den Produktionsvorgaben entnommen werden.

Es versteht sich, dass die vorliegende Erfindung nicht auf eine Ausgestaltung mit dem Bahnzug als ersten Prozessparameter beschränkt ist. Vielmehr ist es auch grundsätzlich denkbar, dass der erste Prozessparameter aus der weiter unten genannten Gruppe der weitere Prozessparameter gewählt wird.

In einer möglichen Ausgestaltung der Erfindung kann das zumindest eine Vergleichs-Maß der Ist-Planlage des Bahnmaterials eine Vergleichs-Planlage sein. Insbesondere kann das zumindest eine Vergleichs-Maß der Ist-Planlage des Bahnmaterials eine Vergleichs-Topografie sein. Dies kann beispielsweise dann der Fall sein, wenn zur Ermittlung der Ist-Planlage des Bahnmaterials eine Ist-Topografie einer oder mehrerer Oberflächen des Bahnmaterials ermittelt wird. Es ist zudem denkbar, dass das zumindest eine Vergleichs-Maß der Oberfläche des Bahnmaterials ein die Ist-Topografie kennzeichnender Kennwert ist, beispielsweise die Standardabweichung, der Variationskoeffizienten, die Schiefe nach Pearson, die Wölbung und der Exzess, die Mittelabweichung, die Abbott-Kurve und/oder die Profiltiefe der Ist-Topografie.

In einer weiteren möglichen Ausgestaltung kann das Verfahren das Ermitteln zumindest eines weiteren Prozessparameters des Herstellungsverfahrens umfassen. Der zumindest eine weitere Prozessparameter kann dabei beispielsweise aus der Gruppe der Prozessparameter Breite des Bahnmaterials; Dicke des Bahnmaterials; Materialzusammensetzung des Bahnmaterials; Temperatur des Bahnmaterials oder Umgebungstemperatur des Bahnmaterials ausgewählt sein.

Wie schon zuvor erläutert, versteht es sich, dass die zuvor genannten weiteren Prozessparameter grundsätzlich auch als erster Prozessparameter dienen können. In diesem Fall kann der Bahnzug als der zumindest eine weitere Prozessparameter dienen.

Das Ermitteln der Breite des Bahnmaterials als Prozessparameter kann mittels einer Bahnbreitenmessanordnung erfolgen. Die Bahnbreitenmessanordnung kann dabei ein beliebiges dem Fachmann bekanntes taktiles oder berührungsloses Messsystem sein, das ausgestaltet ist, die Breite des Bahnmaterials zu ermitteln. Dabei kann die Breite des Bahnmaterials einmalig respektive an einem Messpunkt, mehrmals respektive an mehreren Messpunkten oder kontinuierlich ermittelt werden. Es ist allerdings auch denkbar, dass für die Ermittlung der Breite des Bahnmaterials die Soll-Breite des Bahnmaterials festgestellt wird. Hierzu kann die Soll-Breite des Bahnmaterials beispielsweise den Produktionsvorgaben oder den Kundenanforderungen entnommen werden.

Das Ermitteln der Dicke des Bahnmaterials als Prozessparameter kann mittels einer Bahndickenmessanordnung erfolgen. Die Bahndickenmessanordnung kann dabei ein beliebiges dem Fachmann bekanntes taktiles oder berührungsloses Messsystem sein, das ausgestaltet ist, die Dicke des Bahnmaterials zu ermitteln. Dabei kann die Dicke des Bahnmaterials einmalig respektive an einem Messpunkt, mehrmals respektive an mehreren Messpunkten oder kontinuierlich ermittelt werden. Es ist allerdings auch denkbar, dass für die Ermittlung der Dicke des Bahnmaterials die Soll-Dicke des Bahnmaterials festgestellt wird. Hierzu kann die Soll-Dicke des Bahnmaterials beispielsweise den Produktionsvorgaben oder den Kundenanforderungen entnommen werden.

Das Ermitteln einer Materialzusammensetzung des Bahnmaterials als Prozessparameter kann insbesondere durch das Feststellen der Soll-Materialzusammensetzung erfolgen, beispielsweise aus Produktionsvorgaben oder Kundenanforderungen. Das Bahnmaterial kann ein oder mehrere Lagen von Materialien umfassen, die miteinander verbunden sind. Die Materialzusammensetzung des Bahnmaterials kann die Beschreibung der Anzahl der Lagen des Bahnmaterials und das in den einzelnen Lagen verwendete Material umfassen. Insofern kann die Materialzusammensetzung auch als Rezeptur bezeichnet werden. Es ist auch denkbar, dass das Ermitteln einer Materialzusammensetzung des Bahnmaterials mittels einer Materialprüfanordnung erfolgt, die ausgestaltet ist, die Materialzusammensetzung des Bahnmaterials zu ermitteln. Dabei kann die Materialzusammensetzung des Bahnmaterials einmalig respektive an einem Messpunkt, mehrmals respektive an mehreren Messpunkten oder kontinuierlich ermittelt werden.

Nach dem Ermitteln einer Materialzusammensetzung des Bahnmaterials kann zumindest ein Materialkennwert des Bahnmaterials in Abhängigkeit der Materialzusammensetzung bestimmt werden. Hierbei können die Eigenschaften der einzelnen Lagen des Bahnmaterials in dem zumindest einen Materialkennwert zusammengefasst werden. Als Materialkennwert kommen insbesondere die die Zugfestigkeit, die auch als Reißfestigkeit bezeichnet werden kann, die Bruchdehnung, die auch als Reißdehnung bezeichnet werden kann, der E-Modul, der Kriechmodul und die Dichte in Betracht. Auch der Melt Flow Index (MFI) kann als ein Materialkennwert in Betracht kommen. Es versteht sich, dass der Materialkennwert grundsätzlich auch als erster Prozessparameter dienen kann.

Das Ermitteln der Temperatur des Bahnmaterials als Prozessparameter kann durch eine Temperaturmessanordnung erfolgen. Die Temperaturmessanordnung kann dabei ein beliebiges dem Fachmann bekanntes taktiles oder berührungsloses Messsystem sein, das ausgestaltet ist, die Temperatur des Bahnmaterials zu ermitteln. Dabei kann die Temperatur des Bahnmaterials einmalig respektive an einem Messpunkt, mehrmals respektive an mehreren Messpunkten oder kontinuierlich ermittelt werden. Es ist allerdings auch denkbar, dass für die Ermittlung der Temperatur des Bahnmaterials die Soll-Temperatur des Bahnmaterials festgestellt wird. Hierzu kann die Soll-Temperatur des Bahnmaterials beispielsweise den Produktionsvorgaben entnommen werden.

Das Ermitteln einer Umgebungstemperatur kann durch eine weitere Temperaturmessanordnung erfolgen. Es ist auch denkbar, dass eine Temperaturmessanordnung sowohl die Temperatur des Bahnmaterials als auch die Umgebungstemperatur ermittelt.

In einer weiteren möglichen Ausführungsform kann das Ermitteln der Ist-Planlage des Bahnmaterials und/oder das Ermitteln der Prozessparameter in einem Ermittlungsbereich zwischen einer ersten Walze und einer zweiten Walze erfolgen. Über die erste Walze und die zweite Walze wird das Bahnmaterial jeweils geführt. Die erste und die zweite Walze können insbesondere Elemente einer Flachlegeeinheit, eines Hauptabzugs, eines Zwischenabzugs, eines Reckwerks, eines Vorabzugs in einer Wickelanordnung, eines Hilfsabzugs in der Wickelanordnung oder der Wickelstelle sein. Die erste Walze und die zweite Walze können in einer Transportrichtung des Bahnmaterials nachfolgend zueinander angeordnet werden und können somit in Transportrichtung des Bahnmaterials mit einem Abstand zueinander angeordnet sein.

Das Ermitteln der Ist-Planlage des Bahnmaterials kann mittels einer Planlagemesseinheit erfolgen. Die Planlagemesseinheit kann insbesondere dazu ausgestaltet sein, eine Ist-Topografie einer Oberfläche des Bahnmaterials zu ermitteln. Das Ermitteln der Ist-Planlage des Bahnmaterials kann in einer Querebene des Bahnmaterials erfolgen. Alternativ oder in Kombination kann das Ermitteln der Ist-Planlage des Bahnmaterials mittels einer Planlagemesseinheit erfolgen, die in der Querebene des Bahnmaterials angeordnet ist. Die Querebene kann quer, insbesondere orthogonal, zu der Transportrichtung des Bahnmaterials ausgerichtet sein und als Messebene bezeichnet werden.

Die Planlagemesseinheit kann in einer möglichen Ausgestaltung einen Messbalken umfassen, der quer, insbesondere orthogonal, zu der Transportrichtung des Bahnmaterials angeordnet ist. Der Messbalken kann eine Messspur auf dem Bahnmaterial erfassen, die sich gerade von einer Längsseite zu der anderen Längsseite des Bahnmaterials erstreckt. Mit anderen Worten kann der Messbalken den Oberflächenverlauf in einer Querebene des Bahnmaterials ermitteln.

In einer weiteren möglichen Ausgestaltung der ist es denkbar, dass die Planlagemesseinheit ein traversierendes Messsystem umfasst, das auf einem Trägerelement zwischen einer ersten Endlage und einer zweiten Endlage verfahrbar ist. Das Messsystem kann auch als Messschlitten bezeichnet werden. Das Trägerelement kann quer, insbesondere orthogonal, zu der Transportrichtung des Bahnmaterials angeordnet sein. Die Endlagen können dabei jeweils mit einer Längsseite des Bahnmaterials in der Querebene in Überdeckung sein oder einen größeren Abstand voneinander ausweisen als die Breite des Bahnmaterials. Somit kann die Planlage respektives die Ist-Topografie über die gesamte Breite des Bahnmaterials erfasst werden. Während das Messsystem auf dem Trägerelement verfahren wird, erfasst das Messsystem an einem Messpunkt respektive an einer Messfläche die Oberfläche des Bahnmaterials, wobei der Messpunkt respektive die Messfläche über die Breite des Bahnmaterials verschoben wird. Die Erfassung des Messpunktes kann kontinuierlich, quasi-kontinuierlich oder punktweise erfolgen. Durch die Bewegung des Bahnmaterials in Transportrichtung ergibt sich eine Messspur auf der Oberfläche des Bahnmaterials, die wellenförmig und bei konstanter Verfahrgeschwindigkeit des Messsystems insbesondere zick-zack-förmig ist. Das Ermitteln der Ist-Planlage des Bahnmaterials kann entlang des Bahnmaterials abschnittsweise oder kontinuierlich erfolgen.

Die Planlagemesseinheit kann zudem so ausgestaltet sein, dass auch das Ermitteln der Breite des Bahnmaterials als Prozessparameter mittels der Planlagemesseinheit erfolgt.

Das Ermitteln des ersten Prozessparameters und/oder des zumindest einen weiteren Prozessparameters kann in Transportrichtung des Bahnmaterials im Bereich der Querebene erfolgen.

Das Verfahren kann als weiteren Verfahrensschritt das Ermitteln des Abstands zwischen der ersten Walze und der zweiten Walze umfassen. Der Abstand zwischen der ersten Walze und der zweiten Walze kann dabei durch den Abstand der beiden Drehachsen der ersten Walze und der zweiten Walze definiert sein. In diesem Fall kann der Abstand zwischen der ersten Walze und der zweiten Walze beispielsweise den Konstruktionszeichnungen der für das Verfahren verwendete Anlage entnommen oder gemessen werden. Alternativ kann der Abstand zwischen der ersten Walze und der zweiten Walze durch den Ablösepunkte des Bahnmaterials von der ersten Walze und den Einlaufpunkt des Bahnmaterials auf der zweiten Walze definiert sein. Der Ablösepunkt ist dabei dort definiert, wo das Bahnmaterial in Transportrichtung letztmalig mit einer Walze in Kontakt ist. Der Einlaufpunkt ist dabei dort definiert, wo das Bahnmaterial in Transportrichtung erstmalig in Kontakt mit einer Walze kommt. In diesem Fall kann der Abstand zwischen der ersten Walze und der zweiten Walze beispielsweise anhand der Konstruktionsdaten der für das Verfahren verwendete Anlage berechnet werden, insbesondere aus dem Achsabstand der beiden Walzen und deren jeweiligen Durchmessern.

Das Verfahren kann als weiteren Verfahrensschritt das Ermitteln eines Abstandes zwischen der ersten Walze und der Planlagemesseinheit umfassen. Der Abstand zwischen der ersten Walze und der Planlagemesseinheit kann dabei durch den Abstand des Ablösepunktes des Bahnmaterials von der ersten Walze und der Schnittgeraden, die durch das Bahnmaterial und die Messebene gebildet ist, in Transportrichtung definiert sein. Verläuft die Querebene nicht orthogonal zu der Transportrichtung kann als relevanter Abstand beispielweise der kürzestes, ein mittlerer oder der größte Abstand des Ablösepunktes des Bahnmaterials von der ersten Walze und der Schnittgeraden in Transportrichtung gewählt werden, da der Abstand über die Breite des Bahnmaterials variiert.

In einer weiteren möglichen Ausführungsform kann das Umrechnen der Ist-Planlage in zumindest ein Vergleichs-Maß der Ist-Planlage zusätzlich in Abhängigkeit zumindest eines der weiteren Prozessparameter Breite des Bahnmaterials, Dicke des Bahnmaterials, Materialzusammensetzung des Bahnmaterials, Temperatur des Bahnmaterials, Umgebungstemperatur, Abstand zwischen der ersten Walze und der zweiten Walze, Abstand zwischen der ersten Walze, Abstand zwischen der zweiten Walze und der Planlagemesseinheit und/oder in Abhängigkeit des zumindest einen Materialkennwertes erfolgen.

In einer weiteren möglichen Ausführungsform kann das Verfahren als weiteren Verfahrensschritt das Festlegen eines Referenzwertes des ersten Prozessparameters umfassen. Das Ermitteln eines der oben genannten Prozessparameter hat jeweils einen Betrag oder Ist-Wert des Prozessparameters als Ergebnis. Der Referenzwert entspricht einem festgelegten Betrag respektive Wert, der zur relativen Einordnung des ermittelten Betrages respektive Wertes des Prozessparameters dient. Der Referenzwert kann auch als Bezugswert bezeichnet werden. Beispielsweise kann der erste Prozessparameter der Bahnzug des Bahnmaterials sein und der Referenzwertes des ersten Prozessparameters kann ein Referenz-Bahnzug sein. Als Referenz-Bahnzug kommt insbesondere ein Wert von 50 N bis 150 N in Betracht.

Das Umrechnen der Ist-Planlage in das zumindest eine Vergleichs-Maß der Ist-Planlage kann in Abhängigkeit des Referenzwertes des ersten Prozessparameters und/oder des ermittelten ersten Prozessparameters erfolgen. Mit anderen Worten kann die zuvor ermittelte Ist-Planlage in das zumindest eine Vergleichs-Maß der Ist-Planlage umgerechnet werden, wobei zur Umrechnung der Referenzwertes des ersten Prozessparameters und/oder der ermittelte erste Prozessparameter herangezogen werden können.

Das Festlegen des Referenzwertes des ersten Prozessparameters kann in Abhängigkeit von zumindest einem der weiteren Prozessparameter Breite des Bahnmaterials, Dicke des Bahnmaterials, Materialzusammensetzung des Bahnmaterials, Temperatur des Bahnmaterials, Umgebungstemperatur sowie dem Abstand zwischen der ersten Walze und der zweiten Walze, Abstand zwischen der ersten Walze und der Planlagemesseinheit und/oder in Abhängigkeit des zumindest einen Materialkennwertes erfolgen.

Der Referenzwert des ersten Prozessparameters kann somit durch einen von dem Bahnmaterial unabhängigen Wert repräsentiert werden oder aber durch einen Wert, der von dem Bahnmaterial abhängig ist. In beiden Fällen kann der Referenzwert des ersten Prozessparameters dazu dienen, eine Vergleichbarkeit zwischen einzelnen Messergebnissen an gleichen oder verschiedenen Bahnmaterialien sicherzustellen.

In einer weiteren möglichen Ausführungsform kann der Bahnzug in Transportrichtung des Bahnmaterials im Bereich der Querebene ermittelt werden. Der Bereich zwischen dem Ablösepunkt des Bahnmaterials von der ersten Walze und dem Einlaufpunkt des Bahnmaterials auf die zweite Walze kann als Ermittlungsbereich bezeichnet werden. Es versteht sich für den Fachmann, dass in dem Ermittlungsbereich der Bahnzug in Transportrichtung als konstant angenommen werden kann. Insofern ist es auch denkbar, dass der Bahnzug in Transportrichtung des Bahnmaterials außerhalb der Querebene ermittelt werden kann. Insbesondere ist es denkbar, dass der Bahnzug in Transportrichtung des Bahnmaterials in dem Ermittlungsbereich ermittelt wird.

Zur Lösung der Aufgabe wird ferner ein Verfahren zur Bewertung der Planlage von Bahnmaterial vorgeschlagen, umfassend: das Verfahren zur Bestimmung der Planlage im Herstellungsverfahren von flexiblem Bahnmaterial nach einer zuvor beschriebenen Ausführungsform, sowie den Verfahrensschritt: Umrechnen des zumindest einen Vergleichs-Maßes der Ist-Planlage des Bahnmaterials in zumindest eine Qualitätskenngröße der Planlage.

Die Qualitätskenngröße ist ein Kennwert, der die Güte bezüglich eines oder mehreren Qualitätsaspekten der Planlage zusammenfassend beschreibt. Aus der zumindest einen Qualitätskenngröße der Planlage kann somit einfach auf die Güte der Planlage geschlossen werden.

Insbesondere ist es denkbar, dass das zumindest eine Vergleichs-Maß in genau eine Qualitätskenngröße der Planlage umgerechnet wird. In diesem Fall kann die Planlage ganzheitlich in einer Kenngröße dargestellt werden, um die Güte des Fertigungsprozesses bewerten zu können. Es ist ebenfalls denkbar, dass das zumindest eine Vergleichs-Maß in mehrere Qualitätskenngrößen der Planlage umgerechnet wird, um die Güte verschiedener Aspekte des Fertigungsprozesses bewerten zu können. Beispielweise kann eine Qualitätskenngröße die Ausbeulung (Bagginess) des Bahnmaterials bewerten und eine weitere Qualitätskenngröße kann den Bogenlauf (Camber) des Bahnmaterials bewerten. Die Qualitätskenngröße kann beispielsweise einen Wert zwischen 0 (geringe Güte) und 100 (hohe Güte) annehmen, in Form eines Schulnotensystems ausgestaltet oder als Ampelsystem ausgeführt sein.

Das Umrechnen des zumindest einen Vergleichs-Maßes in die zumindest eine Qualitätskenngröße der Planlage kann in dem Fall, in dem das zumindest eine Vergleichs-Maß der Ist-Planlage des Bahnmaterials eine Vergleichs-Topografie ist, anhand eines der Verfahren der Bestimmung der Standardabweichung, der Bestimmung des Variationskoeffizienten, der Bestimmung der Schiefe nach Pearson, der Bestimmung der Wölbung und des Exzess, der Bestimmung der Mittelabweichung, der Bestimmung der Abbott-Kurve und/oder der Bestimmung der Profiltiefe der Vergleichs-Topografie erfolgen.

Zur Lösung der Aufgabe wird weiter eine Planlagemessanordnung für Bahnmaterial vorgeschlagen, umfassend: eine Planlagemesseinheit, die ausgestaltet ist, eine Ist-Planlage des Bahnmaterials in dem Ermittlungsabschnitt des Bahnmaterials zu ermitteln, eine Bahnzugeinheit, die ausgestaltet ist, den Bahnzug in dem Ermittlungsabschnitt des Bahnmaterials zu ermitteln, und eine Auswerteeinheit, die ausgestaltet ist, die Ist-Planlage in zumindest ein Vergleichs-Maß der Ist-Planlage des Bahnmaterials in Abhängigkeit des Bahnzuges umzurechnen.

Insbesondere kann die Planlagemesseinheit ausgestaltet sein, zur Ermittlung der Ist-Planlage des Bahnmaterials eine Ist-Topografie einer Oberfläche des Bahnmaterials in dem Ermittlungsabschnitt des Bahnmaterials zu ermitteln.

Die Planlagemessanordnung kann insbesondere für die Planlagemessung einer Kunststoffbahn geeignet sein.

Die Planlagemessanordnung kann ausgestaltet sein, ein Verfahren der zuvor beschriebenen Art auszuführen. Insofern kann die Planlagemessanordnung Elemente enthalten, die ausgestaltet sind, die zuvor beschriebenen Verfahrensschritte auszuführen, wobei an dieser Stelle abkürzend auf die obigen Erläuterungen verwiesen wird.

Die Bahnzugeinheit kann einen Bahnzugsensor umfassen, der den Bahnzug in dem Ermittlungsabschnitt des Bahnmaterials ermittelt respektive misst. Alternativ kann die Bahnzugeinheit eine Schnittstelle aufweisen, über die die Bahnzugeinheit Daten über den Bahnzug von einem externen Steuergerät empfängt. Das externe Steuergerät kann insbesondere ein Steuergerät einer Folienblasanlage sein, in der die Planlagemessanordnung verwendet wird.

Die Bahnzugeinheit kann zudem so ausgestaltet sein, dass diese einen Bahnzug auf das Bahnmaterial in dem Ermittlungsabschnitt aufbringen und/oder festlegen kann. Hierbei kann die Bahnzugeinheit beispielsweise ein Paar Abzugswalzen umfassen, zwischen denen ein Spalt gebildet ist, durch den das Bahnmaterial hindurchgeführt wird. Eine oder beide Abzugswalzen können gummiert sein.

Die Auswerteeinheit kann mit der Planlagemesseinheit und der Bahnzugeinheit verbunden sein, sodass die Auswerteeinheit Daten über die Ist-Planlage respektive Ist-Topografie und den Bahnzug empfangen kann.

Die Planlagemessanordnung kann in einer möglichen Ausführungsform einen Modulrahmen umfassen. An dem Modulrahmen kann die Planlagemesseinheit, die Bahnzugeinheit und/oder die Auswerteeinheit befestigt sein. Der Modulrahmen ermöglicht die einfache Integration der Planlagemessanordnung in bestehende Folienblasanlagen.

Zur Lösung der Aufgabe wird weiter eine Folienblasanlage vorgeschlagen, umfassend: einen Blaskopf zum Ausstoßen eines Folienschlauchs, eine Flachlegeeinheit zum Zusammenlegen des Folienschlauchs zu einem Bahnmaterial, eine Planlagemessanordnung nach einer zuvor beschriebenen Ausführungsform.

Nachfolgend werden die erfindungsgemäßen Verfahren zusammen mit möglichen Ausgestaltungen der Planlagemessanordnung und der Folienblasanlage anhand der Figurenzeichnungen erläutert. Hierin zeigt
- Figur 1: eine schematische Darstellung einer Folienblasanlage;
- Figur 2: eine schematische Seitenansicht des Ermittlungsabschnitts der Folienblasanlage aus Figur 1;
- Figur 3: eine schematische Draufsicht des Ermittlungsabschnitts der Folienblasanlage aus Figur 1;
- Figur 4: eine erste alternative Ausgestaltung der Wickelanordnung der Folienblasanlage aus Figur 1;
- Figur 5: eine zweite alternative Ausgestaltung der Wickelanordnung der Folienblasanlage aus Figur 1;
- Figur 6: ein Flussdiagramm eines Verfahrens zur Bestimmung der Planlage von flexiblem Bahnmaterial, und
- Figur 7: ein Flussdiagramm eines Verfahrens zur Bewertung der Planlage von Bahnmaterial.

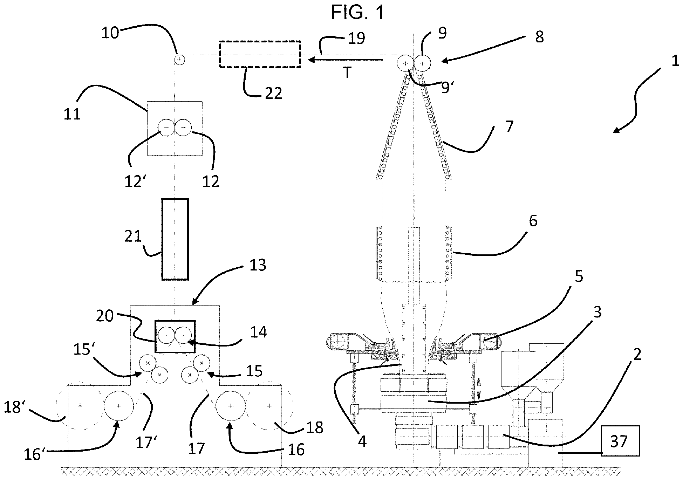

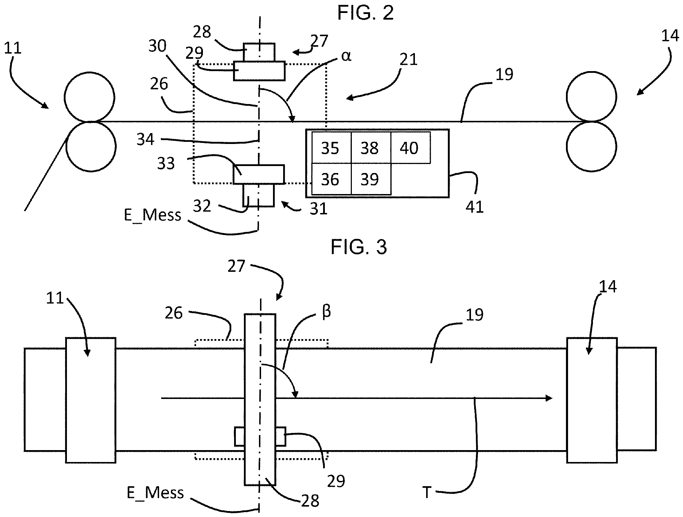

Die Figuren 1 bis 3, die nachfolgend gemeinsam beschrieben werden, zeigen eine Folienblasanlage 1, die zur Herstellung von flexiblem Bahnmaterial ausgestaltet ist und von einem Steuergerät 37 gesteuert wird. Das flexible Bahnmaterial ist im vorliegenden Fall eine Kunststofffolie 17, 17`. Die Folienblasanlage 1 umfasst einen Extruder 2 zum Plastifizieren und Transportieren eines Kunststoffes in Richtung eines Blaskopfes 3. Der Blaskopf 3 umfasst eine ringförmige Öffnung, aus dem der plastifizierte Kunststoff ausgestoßen wird, sodass ein Kunststoffschlauch 4 gebildet ist. Der Kunststoffschlauch 4 läuft in einen Kühlring 5 ein, der den Kunststoffschlauch 4 in dem Fachmann bekannter Weise kühlt und verfestigt. Nachfolgend läuft der Kunststoffschlauch 4 in eine Kalibriervorrichtung 6 zur Durchmesserkalibrierung des Kunststoffschlauches 4 ein. Nach der Durchmesserkalibrierung wird der Kunststoffschlauch 4 in einer Flachlegeeinrichtung 7 zu einer doppelten Kunststoffbahn, die auch als Bahnmaterial 19 bezeichnet werden kann, zusammengelegt.

Das Bahnmaterial 19 wird nachfolgend in einen Hauptabzug 8 geführt. Der Hauptabzug 8 weist eine erste Walze 9 und eine zweite Walze 9' auf, die einen Spalt bilden, durch den das Bahnmaterial 19 hindurch läuft. Die erste Walze 9 und die zweite Walze 9` können auch als Abquetschwalze bezeichnet werden. Der Hauptabzug 8 ist dabei ausgestaltet, einen Bahnzug auf den Kunststoffschlauch 4 aufzubringen.

Das Bahnmaterial 19 wird nach dem Hauptabzug 8 in einer Transportrichtung T über eine Umlenkwalze 10 geführt und einem Zwischenabzug 11 zugeführt. Der Zwischenabzug 11 weist eine erste Walze 12 und eine zweite Walze 12' auf, die einen Spalt bilden, durch den das Bahnmaterial 19 hindurch läuft. Der Zwischenabzug 11 ist dabei ausgestaltet, einen Bahnzug auf das Bahnmaterial 19 aufzubringen, insbesondere in dem ersten Bahnmaterialbereich zwischen dem Hauptabzug 8 und dem Zwischenabzug 11.

Alternativ oder in Kombination zu dem Zwischenabzug 11 kann die Folienblasanlage 1 eine Reckeinrichtung umfassen, in der das Bahnmaterial 19 erwärmt und über eine oder mehrere Walzen gereckt wird, um ein gewünschte Reckverhältnis zu erreichen. Die Folienblasanlage 1 umfasst zudem eine Wickelanordnung 13, in der eine erste Kunststofffolie 17 und eine zweite Kunststofffolie 17` jeweils auf ein zugeordnetes Folienwickel 18, 18' aufgewickelt wird. Die Kunststofffolien 17, 17' können ebenfalls als Bahnmaterial bezeichnet werden. Die Wickelanordnung 13 weist einen Vorabzug 14 mit zwei Walzen auf, mittels denen ein Bahnzug auf das Bahnmaterial 19 aufgebracht werden kann, insbesondere in dem zweiten Bahnbereich zwischen dem Zwischenabzug 11 respektive der Reckeinrichtung und dem Vorabzug 14. Im vorliegenden Fall läuft das doppelt-gelegte Bahnmaterial 19 in den Vorabzug 14 ein und wird nach dem Austritt aus dem Vorabzug 14 mittels einer Trenneinrichtung 20 in die beiden Kunststofffolien 17, 17' getrennt. Derartige Trenneinrichtungen 20 sind dem Fachmann bekannt.

Die Kunststofffolien 17, 17' werden jeweils über eine Kontaktwalze 16, 16' auf den jeweiligen Folienwickeln 18, 18` aufgewickelt. Die Kontaktwalze 16, 16' liegt direkt am jeweiligen Folienwickel 18, 18' an und sorgt für eine Führung der Kunststofffolien 17, 17' auf den jeweiligen Folienwickeln 18, 18`. Die Kontaktwalzen 16, 16' können einen Bahnzug auf die Kunststofffolien 17, 17' aufbringen, insbesondere in einem dritten Bahnbereich zwischen dem Vorabzug 14 und der jeweiligen Kontaktwalze 16, 16`.

Zwischen dem Vorabzug 14 und den Kontaktwalzen 16, 16' kann optional ein Hilfsabzug 15, 15' angeordnet sein, der zwei Walzen aufweist, mittels denen ein Bahnzug auf die Kunststofffolien 17, 17' aufgebracht werden kann, insbesondere in einem vierten Bahnbereich zwischen dem Vorabzug 14 und dem jeweiligen Hilfsabzug 15, 15`.

Die Folienblasanlage 1 umfasst eine erste Planlagemessanordnung 21, die ausgestaltet ist, eine Ist-Planlage des Bahnmaterials 19 in dem zweiten Bahnabschnitt zu ermitteln. Konkret ermittelt die erste Planlagemessanordnung 21 eine Ist-Topografie des Bahnmaterials 19, die die Ist-Planlage des Bahnmaterials repräsentiert. Insofern kann der zweite Bahnabschnitt auch als zweiter Ermittlungsabschnitt bezeichnet werden. Die erste Planlagemessanordnung 21 umfasst eine erste Planlagemesseinheit 27 zur Ermittlung der Ist-Topografie einer ersten Oberfläche des doppel-gelegten Bahnmaterials 19. Die erste Oberfläche kann auch als Oberseite bezeichnet werden. Die erste Planlagemesseinheit 27 umfasst einen Trägerbalken 28, auf dem ein Messschlitten 29 verschiebbar gelagert ist. Der Messschlitten 29 umfasst einen Laser, der mit einem Laserstrahl 30 die Topografie der ersten Oberfläche des Bahnmaterials 19 abtastet.

Der Messschlitten 29 traversiert auf dem Trägerbalken 28 kontinuierlich zwischen einer ersten Endlage und einer zweiten Endlage hin und her. Der Laserstrahl 30 wird somit in einer Messebene E_Mess verfahren. Die erste Endlage und die zweite Endlage sind in der Messebene E_Mess in Überdeckung mit den Längsseiten des Bahnmaterials 19 oder darüber hinaus angeordnet. Im vorliegenden Fall ist die Messebene E_Mess orthogonal zu der Oberfläche und der Transportrichtung des Bahnmaterials 19 angeordnet. Es ist aber auch denkbar, dass die Messebene E_Mess in einem Winkel α zu der Oberfläche des Bahnmaterials 19 angeordnet ist, der von 90 Grad abweicht. Alternativ oder in Kombination ist es denkbar, dass die Messebene E_Mess in einem Winkel β zu der Transportrichtung des Bahnmaterials 19 angeordnet ist, der von 90 Grad abweicht. Der Winkel β ist dabei um eine Normale auf die Oberfläche des Bahnmaterials 19 angeordnet. Die Messebene E_Mess kann insofern auch als Querebene bezeichnet werden.

Die erste Planlagemesseinheit 27 erfasst die Topografie des Bahnmaterials 19 entlang einer Messspur, die durch den Schnitt von Laserstrahl 30 und der Oberfläche des Bahnmaterials 19 definiert ist. Durch das Traversieren des Messschlittens 29 auf dem Trägerbalken 28 ist die Messspur im vorliegenden Fall eine wellenförmige Linie, die auch als Zick-Zack-Linie bezeichnet werden kann.

Es ist zudem denkbar, dass die Planlagemesseinheit nicht einen traversierenden Messschlitten umfasst, sondern einen Messbalken mit mehreren fixierten Messmitteln, insbesondere Messlasern. In diesem Fall setzt sich die Messspur aus Geraden zusammen, die durch den Schnitt der Messebene E_Mess mit der Oberfläche des Bahnmaterials 19 definiert sind.

Die erste Planlagemessanordnung 21 umfasst zudem eine zweite Planlagemesseinheit 31 zur Ermittlung der Ist-Topografie einer zweiten Oberfläche des Bahnmaterials 19. Die zweite Oberfläche kann auch als Unterseite des Bahnmaterials 19 bezeichnet werden. Die zweite Planlagemesseinheit 31 umfasst einen Trägerbalken 31 sowie einen Messschlitten 32 und ist analog zu der ersten Planlagemesseinheit 27 ausgestaltet. Insofern gilt das zuvor im Kontext der ersten Planlagemesseinheit 27 Gesagte auch für die zweite Planlagemesseinheit 31.

Die erste Planlagemessanordnung 21 umfasst weiter eine Bahnzugeinheit 35 mit einer Schnittstelle, über die die Bahnzugeinheit 35 Daten über den Bahnzug von dem Steuergerät 37 der Folienblasanlage1 empfängt.

Die erste Planlagemessanordnung 21 umfasst ferner eine Auswerteeinheit 36, die die von der ersten Planlagemesseinheit 27 und der zweiten Planlagemesseinheit 31 ermittelten Ist-Topografien in ein Vergleichs-Maß der Ist-Planlage respektive der Ist-Topografien der jeweiligen Oberfläche des Bahnmaterials 19 in Abhängigkeit des von der Bahnzugeinheit 35 ermittelten Bahnzuges umrechnet.

Die erste Planlagemessanordnung 21 umfasst weiter eine Bahnbreitenmessanordnung 38, die ausgestaltet ist, eine Breite des Bahnmaterials 19 im Ermittlungsbereich zu messen, eine Bahndickenmessanordnung 39, die ausgestaltet ist, eine Dicke des Bahnmaterials 19 im Ermittlungsbereich zu messen, und eine Temperaturmessanordnung 40, die ausgestaltet ist, die Oberflächentemperatur des Bahnmaterials 19 auf der Oberseite und/oder der Unterseite und eine Umgebungstemperatur zu messen.

Die erste Planlagemessanordnung 21 umfasst einen schematisch dargestellten Modulrahmen 26, in dem die Planlagemesseinheiten 27, 31, die Bahnzugeinheit 35, die Auswerteeinheit 36, die Bahnbreitenmessanordnung 38, die Bahndickenmessanordnung 39 und die Temperaturmessanordnung 40 gelagert sind. Durch den Modulrahmen 26 lässt sich die Planlagemessanordnung 21 in einfacher Weise in bestehende Folienblasanlagen integrieren.

Die Folienblasanlage 1 weist eine optionale zweite Planlagemessanordnung 22 auf, die ausgestaltet ist, eine Ist-Planlage respektive eine Ist-Topografie des Bahnmaterials 19 in dem ersten Bahnbereich zwischen Hauptabzug 8 und Zwischenabzug 11 zu ermitteln. Die zweite Planlagemessanordnung 22 kann dabei analog zu der ersten Planlagemessanordnung 21 aufgebaut sein, sodass das zuvor im Kontext der ersten Planlagemessanordnung Gesagte auch für die zweite Planlagemessanordnung 22 gilt.

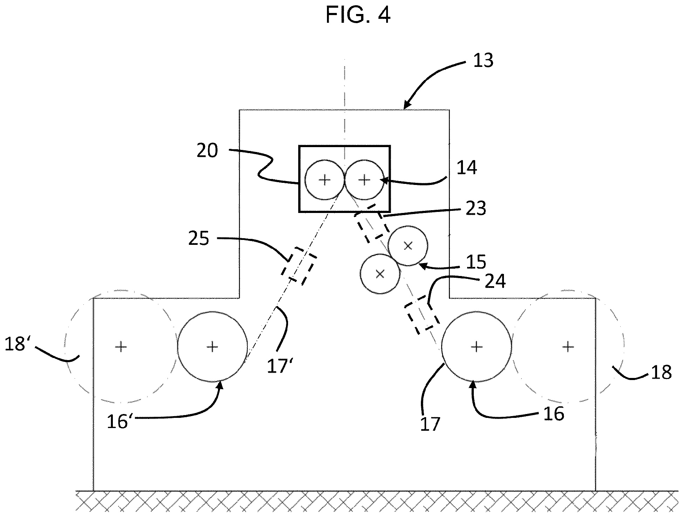

In Figur 4 ist eine alternative Ausgestaltung der Wickelanordnung 13 gezeigt. Diese unterscheidet sich von der Ausgestaltung der Figur 1 dadurch, dass nur die erste Kunststofffolie 17 zusätzlich zudem Vorabzug 14 und zu der Kontaktwalze 16 über einen Hilfsabzug 15 geführt wird. Die zweite Kunststofffolie 17' hingegen wird nur über den Vorabzug 14 und die Kontaktwalze 16 geführt, sodass ein dritter Bahnbereich zwischen dem Vorabzug 14 und der Kontaktwalze 16 definiert ist.

Die Wickelanordnung 13 der Figur 4 umfasst eine optionale dritte Planlagemessanordnung 23, die ausgestaltet ist, eine Ist-Planlage respektive Ist-Topografie der Kunststofffolie 17 in dem vierten Bahnbereich zu ermitteln. Die Wickelanordnung 13 umfasst eine optionale vierte Planlagemessanordnung 24, die ausgestaltet ist, eine Ist-Planlage respektive Ist-Topografie der Kunststofffolie 17 in einem fünften Bahnbereich zwischen der Kontaktwalze 16 und dem Hilfsabzug 15 zu ermitteln. Die Wickelanordnung 13 umfasst eine optionale fünfte Planlagemessanordnung 25, die ausgestaltet ist, eine Ist-Planlage respektive Ist-Topografie der Kunststofffolie 17` in dem dritten Bahnbereich zwischen der Kontaktwalze 16` und dem Vorabzug 14 zu ermitteln.

Die dritte, vierte und fünfte Planlagemessanordnungen 23, 24, 25 können analog zu der ersten Planlagemessanordnung 21 aufgebaut sein, sodass das zuvor im Kontext der ersten Planlagemessanordnung Gesagte auch für diese Planlagemessanordnungen gilt. Es ist auch denkbar, dass die dritte, vierte und fünfte Planlagemessanordnungen 23, 24, 25 nur eine Planlagemesseinheit umfassen und auf die zweite Planlagemesseinheit verzichtet wird.

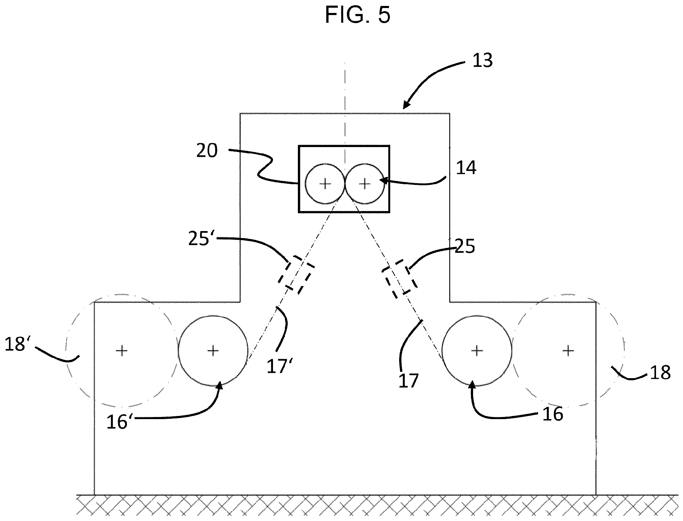

In Figur 5 ist eine weitere alternative Ausgestaltung der Wickelanordnung 13 gezeigt. Diese unterscheidet sich von der Ausgestaltung der Figur 1 dadurch, dass die erste Kunststofffolie 17 und die zweite Kunststofffolie 17' nur über den Vorabzug 14 und die jeweilige Kontaktwalze 16, 16' geführt werden, wobei jeweils ein dritter Bahnbereich zwischen dem Vorabzug 14 und der jeweiligen Kontaktwalze 16, 16' definiert ist.

Die Wickelanordnung 13 der Figur 4 umfasst eine optionale fünfte Planlagemessanordnung 25, die ausgestaltet ist, eine Ist-Planlage respektive Ist-Topografie der Kunststofffolie 17 in dem dritten Bahnbereich zu ermitteln. Die Wickelanordnung 13 umfasst eine weitere optionale fünfte Planlagemessanordnung 25', die ausgestaltet ist, eine Ist-Planlage respektive Ist-Topografie der Kunststofffolie 17` in dem weiteren dritten Bahnbereich zu ermitteln.

Die fünften Planlagemessanordnungen 25, 25' können analog zu der ersten Planlagemessanordnung 21 aufgebaut sein, sodass das zuvor im Kontext der ersten Planlagemessanordnung Gesagte auch für diese Planlagemessanordnungen gilt. Es ist auch in diesem Fall denkbar, dass die fünften Planlagemessanordnungen 25, 25' nur eine Planlagemesseinheit umfassen und auf die zweite Planlagemesseinheit verzichtet wird.

Die erste Planlagemessanordnung 21 umfasst eine Modulsteuergerät 41, das mit der Steuereinheit 37 kommuniziert und die erste Planlagemessanordnung 21 steuert. Es versteht sich, dass jede der Planlagemessanordnung ein separates Modulsteuergerät 41 aufweisen kann oder dass ein Modulsteuergerät 41 vorgesehen ist, das alle Planlagemessanordnungen zusammen steuert.

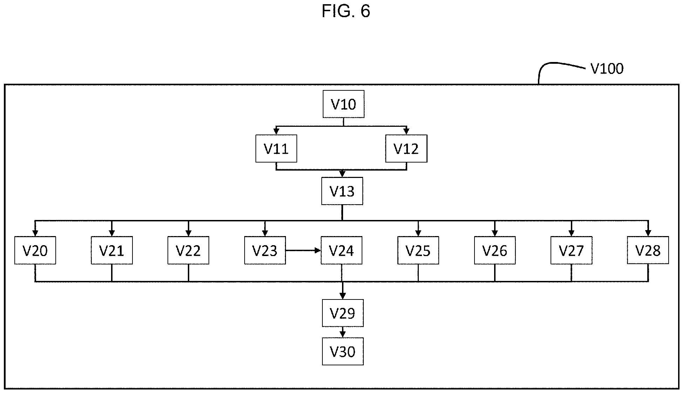

In Figur 6 wird ein erfindungsgemäßes Verfahren V100 zur Bestimmung der Planlage von flexiblem Bahnmaterial anhand eines Flussdiagramms dargestellt. Das Verfahren lässt sich durch die zuvor beschriebene Folienblasanlage 1 respektive durch die darin verwendeten Planlagemessanordnungen 21, 22, 23, 24, 25, 25` ausführen.

In einem ersten Verfahrensschritt V10 wird die Ist-Planlage über die Ist-Topografie einer Oberfläche eines Bahnmaterials 19, 17, 17' in einem oder mehreren Ermittlungsbereichen mittels zumindest einer der Planlagemessanordnungen 21, 22, 23, 24, 25, 25` ermittelt. Das Ermitteln der Ist-Planlage respektive Ist-Topografie erfolgt jeweils in einem Ermittlungsbereich zwischen einer ersten Walze und einer parallelen zweiten Walze, über die das Bahnmaterial jeweils geführt wird. Die erste und die zweite Walze können insbesondere Walzen des Hauptabzugs 8, des Zwischenabzugs 11, des optionalen Reckwerks, des Vorabzugs 14 in der Wickelanordnung 13, des Hilfsabzugs 15, 15` in der Wickelanordnung 13 oder der Kontaktwalzen 16, 16` sein. In einem optionalen Verfahrensschritt V11 wird die Durchbiegung des Trägerbalkens 28, 32 in Abhängigkeit der Messposition über die Breite des Trägerbalkens bestimmt. In einem weiteren optionalen Verfahrensschritt V12 wird eine Verschränkung des Messbalkens gegenüber einer idealen Bahnebene in Abhängigkeit der Messposition über die Breite des Trägerbalkens bestimmt. Die ideale Bahnebene ist die Ebene, die sowohl zu der ersten Walze als auch zu der zweiten Walze Tangentialebene ist. Als Verschränkung soll die Abweichung des Abstands zwischen Trägerbalken 28, 32 und idealer Bahnebene und einem mittleren Abstand verstanden sein. In einem weiteren optionalen Verfahrensschritt V13 wird aus der Durchbiegung und der Verschränkung des Trägerbalkens 28 ein Korrekturprofil bestimmt. Die Prozessschritte V11, V12 und V13 können entweder mit einer dem Prozess V100 vorgelagerten Referenzfahrt durchgeführt werden oder aber während der Durchführung des Prozesses V100.

In einem weiteren Prozessschritt V20 wird ein erster Prozessparameter in dem jeweiligen Ermittlungsbereich ermittelt. Im vorliegenden Fall wird als erster Prozessparameter der Ist-Bahnzug gemessen. Dies erfolgt mittels der Bahnzugeinheit 35 der jeweiligen Planlagemessanordnung 21, 22, 23, 24, 25, 25`.

Das Verfahren umfasst die optionalen Prozessschritte: (V21) Ermitteln einer Breite des Bahnmaterials, insbesondere durch Messen einer Ist-Breite des Bahnmaterials mittels der Bahnbreitenmessanordnung 38; (V22) Ermitteln einer Dicke des Bahnmaterials, insbesondere durch Messen einer Ist-Dicke des Bahnmaterials mittels der Bahndickenmessanordnung 39; (V23) Ermitteln einer Materialzusammensetzung des Bahnmaterials; (V24) Bestimmen zumindest eines Materialkennwertes des Bahnmaterials in Abhängigkeit der in Prozessschritt V23 ermittelten Materialzusammensetzung; (V25) Ermitteln einer Temperatur des Bahnmaterials, insbesondere durch Messen einer Ist-Oberflächentemperatur des Bahnmaterials mittels der Temperaturmessanordnung 40; (V26) Ermitteln einer Umgebungstemperatur mittels der Temperaturmessanordnung 40; (V27) Ermitteln des Abstands zwischen der ersten Walze und der zweiten Walze, und (V28) Ermitteln eines Abstandes zwischen der ersten Walze und der Planlagemesseinheit.

Das Verfahren umfasst als weiteren optionalen Verfahrensschritt V29 das Festlegen eines Referenzwertes des ersten Prozessparameters. Da der erste Prozessparameter im vorliegenden Fall der Bahnzug ist, kann der Referenzwert auch als Referenz-Bahnzug bezeichnet werden. Das Festlegen des Referenzwertes kann in Abhängigkeit von zumindest eines der zuvor ermittelten Werte respektive weiteren Prozessparametern Breite des Bahnmaterials, Dicke des Bahnmaterials, Materialzusammensetzung des Bahnmaterials, Temperatur des Bahnmaterials, Umgebungstemperatur, Abstand zwischen der ersten Walze und der zweiten Walze, Abstand zwischen der ersten Walze und der Planlagemesseinheit und/oder in Abhängigkeit des zumindest einen Materialkennwertes erfolgen.

Nachfolgend wird in einem Prozessschritt V30 die im Verfahrensschritt V10 ermittelte Ist-Planlage in Abhängigkeit des ersten Prozessparameters in zumindest ein Vergleichs-Maß der Ist-Planlage des Bahnmaterials umgerechnet. Im vorliegenden repräsentiert die Ist-Topografie der Oberfläche des Bahnmaterials die Ist-Planlage, sodass die Ist-Topografie der Oberfläche des Bahnmaterials in zumindest ein Vergleichs-Maß der Ist-Topografie des Bahnmaterials umgerechnet wird. Das Vergleichs-Maß der Ist-Topografie des Bahnmaterials ist im vorliegenden Fall eine Vergleichs-Topografie. Die Vergleichs-Topografie wird dadurch ermittelt, dass die Ist-Topografie in Abhängigkeit des ersten Prozessparameters, hier in Abhängigkeit des Bahnzuges, umskaliert wird. Folglich bleibt die relative Lage der lokalen Minima und Maxima der beiden Topografien in Transportrichtung identisch, allerdings wird der Absolutbetrag der lokalen Minima und Maxima verändert. Mit anderen Worten wird die Ist-Topografie in Höhenrichtung gestreckt oder gestaucht, um zu der Vergleichs-Topografie zu gelangen.

Optional kann das Umrechnen der Ist-Planlage in zumindest ein Vergleichs-Maß der Ist-Planlage des Bahnmaterials, insbesondere in die Vergleichs-Topografie, zusätzlich in Abhängigkeit zumindest eines der Werte Breite des Bahnmaterials, Dicke des Bahnmaterials, Materialzusammensetzung des Bahnmaterials, Temperatur des Bahnmaterials, Umgebungstemperatur, Abstand zwischen der ersten Walze und der zweiten Walze, Abstand zwischen der ersten Walze und der Planlagemesseinheit und/oder in Abhängigkeit des zumindest einen Materialkennwertes erfolgen. Als zusätzliche Option kann das Umrechnen der Ist-Planlage in das zumindest eine Vergleichs-Maß in Abhängigkeit des Referenzwertes, hier in Abhängigkeit des Referenz-Bahnzuges, und/oder des ersten Prozessparameters, hier in Abhängigkeit des Bahnzuges erfolgen. Als weitere zusätzliche Option kann vor dem Umrechnen der Ist-Planlage in das zumindest eine Vergleichs-Maß die Ist-Topografie mit dem zuvor erstellten Korrekturprofil korrigiert werden.

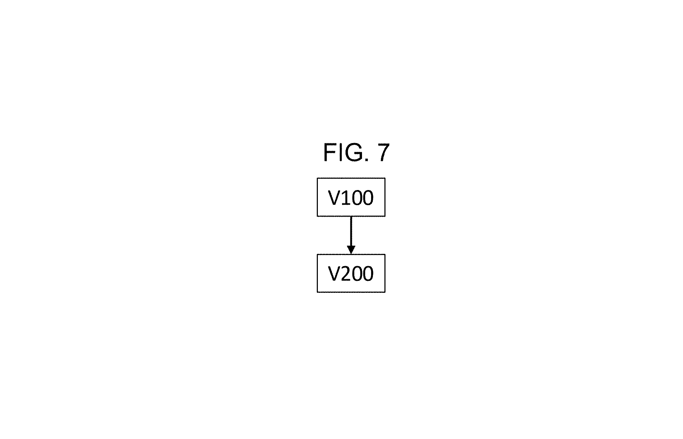

In Figur 7 wird ein Verfahren zur Bewertung der Planlage von Bahnmaterial anhand eines Flussdiagramms gezeigt. Das Verfahren umfasst das zuvor beschrieben Verfahren V100 zur Bestimmung der Planlage von flexiblem Bahnmaterial, sowie den Verfahrensschritt V200: Umrechnen des Vergleichs-Maßes in zumindest eine Qualitätskenngröße der Planlage. Bei dem Prozessschritt können die Vergleichs-Maße einer Planlagemessanordnung oder aber mehrerer paralleler Planlagemessanordnungen in zumindest eine gemeinsame Qualitätskenngröße der Planlage umgerechnet werden.

### Bezugszeichenliste

- 1: Folienblasanlage
- 2: Extruder
- 3: Blaskopf
- 4: Kunststoffschlauch
- 5: Kühlring
- 6: Kalibriervorrichtung
- 7: Flachlegeeinrichtung
- 8: Hauptabzug
- 9: Walze
- 10: Umlenkwalze
- 11: Zwischenabzug
- 12: Walze
- 13: Wickelanordnung
- 14: Vorabzug
- 15: Hilfsabzug
- 16: Kontaktwalze
- 17: Kunststofffolie
- 18: Folienwickel
- 19: Bahnmaterial
- 20: Trenneinrichtung
- 21: Planlagemessanordnung
- 22: Planlagemessanordnung
- 23: Planlagemessanordnung
- 24: Planlagemessanordnung
- 25: Planlagemessanordnung
- 26: Modulrahmen
- 27: Planlagemesseinheit
- 28: Trägerbalken
- 29: Messschlitten
- 30: Laserstrahl
- 31: Planlagemesseinheit
- 32: Trägerbalken
- 35: Bahnzugeinheit
- 36: Auswerteeinheit
- 37: Steuergerät
- 38: Bahnbreitenmessanordnung
- 39: Bahndickenmessanordnung
- 40: Tem peraturmessanordnung
- 41: Modulsteuergerät

- E_Mess: Messebene
- T: Transportrichtung
- α: Winkel
- β: Winkel

## Patentansprüche

1. Verfahren zur Bestimmung der Planlage im Herstellungsverfahren von flexiblem Bahnmaterial, umfassend die Schritte:
Ermitteln einer Ist-Planlage des Bahnmaterials (17, 17', 19);
Ermitteln eines ersten Prozessparameters des Herstellungsverfahrens;
Umrechnen der Ist-Planlage des Bahnmaterials (17, 17', 19) in zumindest ein Vergleichs-Maß der Ist-Planlage des Bahnmaterials (17, 17', 19) in Abhängigkeit des ersten Prozessparameters.

2. Verfahren nach Anspruch 1,
**dadurch gekennzeichnet,**
**dass** zur Ermittlung der Ist-Planlage des Bahnmaterials (17, 17`,19) eine Ist-Topografie einer Oberfläche des Bahnmaterials (17, 17', 19) ermittelt wird.

3. Verfahren nach einem der Ansprüche 1 oder 2,
**dadurch gekennzeichnet,**
**dass** der erste Prozessparameter des Herstellungsverfahrens ein Bahnzug des Bahnmaterials (17, 17', 19) ist.

4. Verfahren nach einem der Ansprüche 1 bis 3,
**dadurch gekennzeichnet,**
**dass** das zumindest eine Vergleichs-Maß der Ist-Planlage des Bahnmaterials (17, 17', 19) eine Vergleichs-Planlage oder eine Vergleichs-Topografie ist.

5. Verfahren nach einem der Ansprüche 1 bis 4,
**gekennzeichnet durch**,
das Ermitteln zumindest eines weiteren Prozessparameters des Herstellungsverfahrens, wobei der zumindest eine weitere Prozessparameter einer der Parameter Breite des Bahnmaterials (17, 17', 19); Dicke des Bahnmaterials (17, 17', 19); Materialzusammensetzung des Bahnmaterials (17, 17', 19); Temperatur des Bahnmaterials (17, 17', 19) oder Umgebungstemperatur ist, und
insbesondere das Bestimmen zumindest eines Materialkennwertes des Bahnmaterials (17, 17', 19) in Abhängigkeit der Materialzusammensetzung.

6. Verfahren nach Anspruch 5,
**dadurch gekennzeichnet,**
**dass** das Umrechnen der Ist-Planlage des Bahnmaterials (17, 17', 19) in das zumindest ein Vergleichs-Maß der Ist-Planlage des Bahnmaterials (17, 17', 19) zusätzlich in Abhängigkeit zumindest eines der weiteren Prozessparameter und/oder
in Abhängigkeit des zumindest einen Materialkennwertes erfolgt.

7. Verfahren nach einem der Ansprüche 1 bis 6,
**gekennzeichnet durch**,
das Festlegen eines Referenzwertes des ersten Prozessparameters,
wobei das Umrechnen der Ist-Planlage des Bahnmaterials (17, 17', 19) in das zumindest ein Vergleichs-Maß der Ist-Planlage des Bahnmaterials (17, 17', 19) in Abhängigkeit des Referenzwertes des ersten Prozessparameters erfolgt.

8. Verfahren nach Anspruch 7,
**dadurch gekennzeichnet,**
**dass** der erste Prozessparameter ein Bahnzug des Bahnmaterials (17, 17', 19) ist, und
**dass** der Referenzwert des ersten Prozessparameters ein Referenz-Bahnzug ist,
wobei das Festlegen eines Referenzwertes des ersten Prozessparameters in Abhängigkeit zumindest eines der weiteren Prozessparameter und/oder in Abhängigkeit des zumindest einen Materialkennwertes erfolgt.

9. Verfahren nach Anspruch 1 bis 8,
**dadurch gekennzeichnet,**
**dass** das Ermitteln der Ist-Planlage des Bahnmaterials (17, 17', 19) in einer Querebene (E_Mess) des Bahnmaterials (17, 17', 19) erfolgt, und/oder
**dass** das Ermitteln der Ist-Planlage des Bahnmaterials (17, 17', 19) mittels einer Planlagemesseinheit (27, 31) erfolgt, die in der Querebene (E_Mess) des Bahnmaterials (17, 17', 19) angeordnet ist,
wobei die Querebene (E_Mess) quer, insbesondere orthogonal, zu einer Transportrichtung (T) des Bahnmaterials (17, 17', 19) ausgerichtet ist.

10. Verfahren nach Anspruch 9,
**dadurch gekennzeichnet,**
**dass** der erste Prozessparameter und/oder der zumindest eine weitere Prozessparameter in Transportrichtung (T) des Bahnmaterials (17, 17', 19) im Bereich der Querebene (E_Mess) ermittelt wird.

11. Verfahren zur Bewertung der Planlage von Bahnmaterial, umfassend:
das Verfahren nach einem der Ansprüche 1 bis 10, und
Umrechnen des zumindest einen Vergleichs-Maßes der Ist-Planlage des Bahnmaterials (17, 17', 19) in zumindest eine Qualitätskenngröße der Planlage.

12. Verfahren nach Anspruch 10,
**dadurch gekennzeichnet,**
**dass** das zumindest eine Vergleichs-Maß der Ist-Planlage des Bahnmaterials (17, 17', 19) eine Vergleichs-Topografie ist, und
**dass** das Umrechnen des zumindest einen Vergleichs-Maßes in die zumindest eine Qualitätskenngröße der Planlage anhand eines der Verfahren der Bestimmung der Standardabweichung, der Bestimmung des Variationskoeffizienten, der Bestimmung der Schiefe nach Pearson, der Bestimmung der Wölbung und des Exzess, der Bestimmung der Mittelabweichung, der Bestimmung der Abbott-Kurve und/oder der Bestimmung der Profiltiefe der Vergleichs-Topografie erfolgt.

13. Planlagemessanordnung für Bahnmaterial, insbesondere für eine Kunststoffbahn, umfassend:
eine Planlagemesseinheit (27, 31), die ausgestaltet ist, eine Ist-Planlage des Bahnmaterials (17, 17', 19), insbesondere eine Ist-Topografie einer Oberfläche des Bahnmaterials (17, 17', 19), in einem Ermittlungsabschnitt des Bahnmaterials (17, 17', 19) zu ermitteln,
eine Bahnzugeinheit (35), die ausgestaltet ist, einen Bahnzug in dem Ermittlungsabschnitt des Bahnmaterials (17, 17', 19) zu ermitteln, und
eine Auswerteeinheit (36), die ausgestaltet ist, die Ist-Planlage in zumindest ein Vergleichs-Maß der Ist-Planlage des Bahnmaterials (17, 17', 19) in Abhängigkeit des Bahnzuges umzurechnen.

14. Planlagemessanordnung nach Anspruch 13,
**gekennzeichnet durch**,
einen Modulrahmen (26), in dem ein oder mehrere der Elemente Planlagemesseinheit (27, 31), Bahnzugeinheit (35) und Auswerteeinheit (36) gelagert sind.

15. Folienblasanlage umfassend:
einen Blaskopf (3) zum Ausstoßen eines Folienschlauchs (4),
eine Flachlegeeinheit (7) zum Zusammenlegen des Folienschlauchs (4) zu einem Bahnmaterial (19),
eine Planlagemessanordnung nach einem der Ansprüche 13 oder 14.
